# EUROPEAN PATENT SPECIFICATION

(11) **EP 3 063 417 B1**
(45) Date of publication and mention of the grant of the patent: **19.09.2018**
(21) Application number: 14857786.9
(22) Date of filing: 30.10.2014
(51) Int. Cl.: F16B 13/12, F16B 13/06

(54) **LOCKING DEVICE**
SPERRVORRICHTUNG
DISPOSITIF DE VERROUILLAGE

(30) Priority: 30.10.2013 NO 20131433
(43) Date of publication of application: 07.09.2016
(73) Proprietor: AS Connector, 5863 Bergen (NO)
(72) Inventor: HISDAL, Pål Magne, N-5243 Fana (NO)
(74) Representative: Acapo AS
(86) International application number: PCT/NO2014/050205
(87) International publication number: WO 2015/065199

(56) References cited:
- GB-A- 538 709
- GB-A- 1 374 178
- GB-A- 2 367 873
- US-A- 3 739 684
- US-A- 5 219 248
- US-A- 5 846 041
- US-A1- 2004 057 810
- US-B1- 6 406 235

## Description

The present invention relates to a locking device for joining together several parts, comprising an internal, open housing that is equipped with internal, locking segments, an internal, open casing for insertion into the housing and which is equipped with external, locking segments and internal, locking grooves, and a plug for insertion into the casing and which is equipped with external, locking grooves.

The lock according to the invention is originally based on the known principle of engagement/friction and expansion, but represents a further development of known design elements in that the plug is installed with a very low force, and in that the forces act against the opening of the lock (opposite direction) and immediately lead to "engagement" between the plug and casing as a combined action between the components of the lock.

The lock according to the invention can be used in any context where two or more parts shall be locked together. However, it is originally developed for use in the protection of pipelines on the ocean bed in that it locks a coat around the production pipe or signal cable that is to be protected against erosion. The lock is intended to be cast in the protection coat. The lock shall be very strong and hold the protection coat in place for many years. Design and choice of material are therefore very important.

From the patent literature reference is given, amongst others, to the following documents. US5846041 A shows a fastening anchor in the form of a plug/casing construction where three parts are used in the form of an inner and an outer casing, and also a bolt. The casings do not have conical wall sections and the bolt is threaded. US5219248 A shows an expansion anchor that also uses an outer casing with engagement between the casings and between casing/bolt. US3832931 A shows an example of a bolt/casing construction with a simple casing and cogged engagement between the parts. US3921496 A shows another example of casing and bolt, where both are externally cogged.

Reference is also given to US2004/0057810 A1 as an example of prior art.

GB2367873 A disclose a coupler device for joining members such as tunnel lining segments and has a first part comprising a male member having two cylindrical ends, each having a series of grooves. A second part includes a tapered recess in which a third part, comprising an expandable collar, is contained, the expandable collar comprises a series of arcuate segments having complementary internal grooves which mate with the grooves on the cylindrical ends of the male member.

The plug and housing/casing of the lock according to the invention are preferably anchored in each part that is assembled. This can be done in many different ways, dependent on the material or the parts that are to be held together.

A central criterion is that the lock shall require minimal force in closing - so that actual components can be fitted together in a simple and quick way. This is one of the central design elements of the lock - and is reached in that the casing has space for expansion when the plug is inserted. In that the casing is forced in the longitudinal direction (in the same direction as the plug) it can also be expanded in the crosswise direction and give a full passage for the plug. The lock can be designed so that the plug meets a defined stopping point. However, this is not a requirement for function or full strength. One can consider cases where it is difficult or impossible to reach a possible stopping point for the plug. In such cases a satisfactory strength will still be able to be reached.

Another central design element with the lock according to the invention is activated in that the plug is pulled in the opposite direction (compared with closing). The plug surface will grab hold of the casing (with the help of structure and/or friction) which immediately reinforces the grip on the plug. The force that acts on the plug in the longitudinal direction will, through the design of the lock, be transformed into a force in the crosswise direction to the point where either the housing lets go of the casing or the casing lets go of the plug (in both cases through deformation) or the plug is broken. The strength of the anchoring of housing, casing and plug in separate parts of the assembly can thereby be greater than the strength of the rest of the lock. However, as long as the lock, as assembled, satisfies defined requirements it is irrelevant which component will break first.

The above mentioned objects are reached with a locking device as given in the introduction, where the external locking segments of the casing correspond with and are opposite to the internal locking segments of the housing, and the internal locking segments of the housing comprise an inclining locking surface and the external locking segments of the casing comprise an inclining locking surface, where said locking surfaces are arranged to be forced against each other during retraction of the plug.

Alternative embodiments are given in the respective dependent claims.

The internal locking segments of the housing can comprise an upper, mainly vertical surface and an inclining, downwardly directed, lower locking surface, and the outer, locking segments of the casing can comprise an upper, mainly vertical surface and an inclining, downwardly directed, lower locking surface.

The inclining, lower locking surface of the housing, from the transition with the upper, vertical surface, can run at a decreasing angle with respect to a centre axis of the housing and the inclining, lower locking surface of the casing, from the transition with the upper, vertical surface, can run at a decreasing angle with regard to a centre axis of the casing.

With the application of an axial force opposite to the insertion direction of the pin, the inclining, locking surface of the casing will be arranged to be forced against the inclining, locking surface of the housing, whereby the force that acts on the plug in the longitudinal direction becomes transformed to a force in the crosswise direction to lead to the casing being compressed and to contribute to the friction between pin and casing increasing faster than the retraction force.

Furthermore, the external, locking grooves of the plug can be correspondingly formed to the internal, locking grooves of the casing and be set up in a locking engagement with the locking grooves of the casing.

The casing can comprise one or more slits that run in the longitudinal direction of the casing and which are arranged to allow expansion of the casing when the plug is inserted into the casing.

The casing can be arranged for insertion in the housing from a first opening end of the housing so that the external, locking segments of the casing lie against the internal, locking segments of the housing, and the plug can be arranged for insertion in the casing from a second opening end of the housing so that the external, locking grooves of the plug engages with the internal, locking grooves of the casing.

Furthermore, the one end of the casing can comprise a head, where the head is arranged to lie against an inner surface in the first opening end of the housing.

Inside the casing, an internal part of the head can be arranged to function as a stopping point for the insertion of the plug in the casing.
The invention shall now be explained in more detail with the help of the enclosed figures, in which:

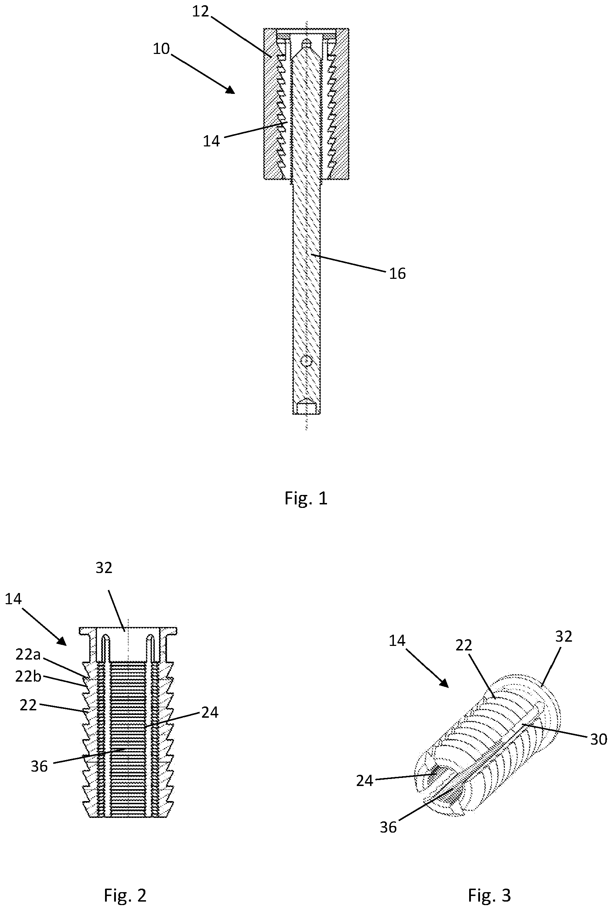

Figure 1 shows a section of an assembled locking device according to the invention.
Figure 2 shows a section of a locking casing that is part of the locking device according to the invention.
Figure 3 shows the casing shown in figure 2 in perspective.

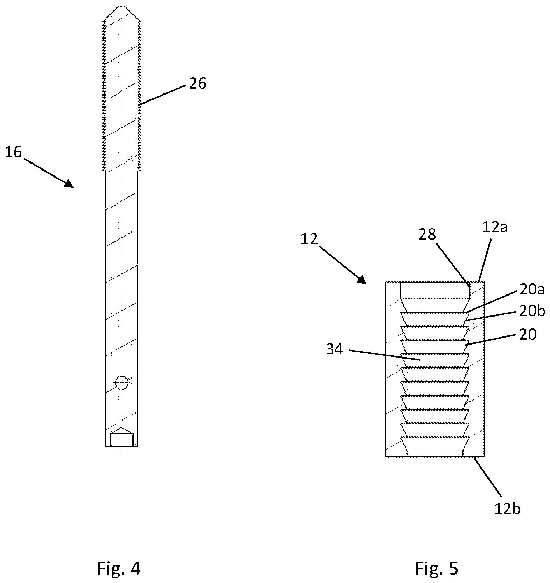

Figure 4 shows a section of a locking plug that is part of the locking device according to the invention.
Figure 5 shows a section of a housing that is part of the locking device according to the invention.

As the figures show, the present invention encompasses a locking device 10, mainly in three parts, comprising a housing 12, a locking casing 14 and a locking plug 16. The external form of the housing can vary depending on application area. The housing 12 can be formed with an extended and externally, circular-cylindrical form and with a through-running boring 34 where the boring 34 is equipped internally with locking segments 20 or wedge segments. The locking segments 20 can have an upper, mainly vertical surface 20a and an inclining, lower locking surface 20b. As shown in the figures the locking segments 20 face upwards, i.e. the tapering or narrowing of the locking surfaces is inclined and facing upwards, and also outwards from a centre axis of the housing 12. The locking segments can, in many ways, be reminiscent of shoulders that are turned upside down compared to normal use. This is also the case for the locking segments in the casing. With upwards or downwards is meant as shown in the figures, but during use of the locking device it will be natural to be able to be orientated in any direction. This is the case for all shown parts of the locking device with the same reference.

The housing 12 further comprises a first end part 12a and a second end part 12b. The boring 34 in the first end part 12a, comprises a flat section 28 which thereafter goes over into the locking segments 20.

The locking casing 14 is, as the figures show, correspondingly formed with an extended and externally circular-cylindrical form, but still with a diameter which is somewhat smaller than the diameter of the boring 34 in the housing 12. The casing 14 is equipped with external, locking segments 22, where the locking segments 22 are preferably formed corresponding to the internal, locking segments 20 in the housing, i.e. with an upper, mainly vertical surface 22a, and an inclining, lower locking surface 22b so that the tapering and narrowing of the locking segments 22 are inclining and facing upwards, and also out from a centre axis of the casing 14. When the casing 14 is fitted in the housing 12, the respective locking segments 20,22 will therefore face each other and the inclining, locking surfaces 20b,22b form contact surfaces with each other. During the fastening and attempting at pulling out of the locking 16, the locking surfaces will be forced against each other and will prevent the retraction. When the locking device 10 is not influenced by any forces, the housing and the casing may, to some extent, be able to move relative to each other. The mainly vertical surfaces 20a,20b of the housing and casing, respectively, will form a stopping-contact with each other and contribute to that the casing 14 cannot be pushed further into the housing 12, in particular, after the locking pin is inserted.

To permit expansion and compression of the casing 14, it can be equipped with slits or grooves 30 that run in the longitudinal direction of the casing. Furthermore, the casing is equipped with a head 32, where the head 32 is arranged to lie in or against the flat section 28 of the housing 12. The casing 14 is equipped internally with a boring 36 to receive the locking plug 16. The boring 36 is open at the one end and preferably sealed at the other end of the head 32. Thereby, the boring 36 will be able to function internally as a stopping point for the plug 16. Furthermore, the casing is equipped with locking grooves 24 inside the boring 36. The locking grooves 24 can be formed corresponding to the locking segments 20,22 but turned upside down, i.e., with the vertical surface at the bottom. The locking grooves 24 can also be formed as furrows.

The locking plug 16 is, as shown, also formed in an extended, circular-cylindrical form. The plug 16 is further equipped, at least at the one end that is inserted into the casing 14, with locking grooves 26 that are arranged to engage with the locking grooves 24 in the boring 34 of the casing 14. For example, the locking grooves 26 can be formed as in the housing or as furrows.

The housing 12 and plug 16 can be equipped with means for fastening to the parts that shall be assembled. Alternatively, the housing and plug can be moulded into the parts that are to be assembled.

The housing 12, the casing 14 and the plug 16 can be mounted in the following way. The casing 14 is inserted into the housing 12 at the end 12a so that the head 32 lies against, and in, the flat section 28. The locking segments 20,22 will then prevent that the casing can be pulled out the same way due to the vertical surfaces 20a,22a, and the head 32 preventing that the casing 14 can be forced further into the housing 12. However, it is possible that the casing 14 can be inserted from the other end 12b of the housing. Thereafter, the plug 16 is inserted into the boring 36 of the casing 14 such that respective locking grooves 24,26 engage with each other. The casing 14 will thereby expand when the plug 16 is inserted and, as the casing 14 is forced in the longitudinal direction (in the same direction as the plug), it will also be able to be expanded in the crosswise direction and allow full passage for the plug. When the plug 16 is then pulled in the opposite direction (compared with shutting), the locking grooves 26 of the plug will grip onto the locking grooves 24 of the casing and reinforce the grip about the plug.

Thus, the locking grooves 24,26 on the outside of the pin and inside the casing have a function to increase the friction to lock between the pin and casing. When an axial force is exerted opposite to the direction of insertion of the pin 16 (retraction of the pin), the force that works on the plug 16 in the longitudinal direction will be transformed to a force in the crosswise direction. Then the angle between the locking segments 20,22 on the outside of the casing 14 and inside the housing 12 leads to the casing 14 being compressed and thus contributes to the friction between the pin 16 and casing 14 increasing faster than the retraction force, so that the pin 16 will be pulled off to a structural break before the retraction of the casing 14 takes place, alternatively, to the point at which the housing 12 either lets go of the casing 14 or the casing 14 lets go of the plug 16. In this connection, the inclining, locking surfaces 22b of the casing 14 are forced against the inclining, locking surfaces 20b of the housing 12, and the inclining edges contribute to increased effect between the parts.

## Claims

1. Locking device (10) for assembling several parts, comprising an internal open housing (12) that is equipped with internal locking segments (20), an internal open casing (14) for insertion into the housing (12) and which is equipped with external locking segments (22) and internal locking grooves (24), and a plug (16) for insertion into the casing (14) and which is equipped with external locking grooves (26), wherein
- the external locking segments (22) of the casing (14) are corresponding to and opposite to the internal locking segments (20) of the housing (12), wherein
- each of the internal locking segments (20) of the housing (12) comprises an inclining locking surface (20b), and each of the external locking segments (22) of the casing (14) comprises an inclining locking surface (22b), where said locking surfaces (20b,22b) are forced against each other during retraction of the plug (16).

2. Locking device (10) according to claim 1,
**characterised in that** the internal locking segments (20) of the housing (12) comprise an upper, mainly vertical surface (20a) and an inclining, downwardly directed, lower locking surface (20b), and that the external locking segments (22) of the casing (14) comprise an upper, mainly vertical surface (22a) and an inclining, downwardly directed, lower locking surface (22b).

3. Locking device (10) according to claim 2,
**characterised in that** the inclining, lower locking surface (20b) of the housing (12), from the transition with the upper vertical surface (20a), runs at a decreasing angle with respect to a centre axis of the housing, and that the inclining, lower locking surface(22b) of the casing (14), from the transition with the upper, vertical surface (22a), runs at a decreasing angle with respect to a centre axis of the casing.

4. Locking device (10) according to claims 2 and 3,
**characterised in that** with application of an axial force opposite to the insertion direction of the pin (16), the inclining, locking surface (22b) of the casing (14) is forced against the inclining, locking surface (20b) of the housing (12), whereby the force that acts on the plug (16) in the longitudinal direction is transformed to a force in the crosswise direction to lead to the casing (14) being compressed and contributes to the friction between the pin (16) and casing (14) to increase faster than the retraction force.

5. Locking device (10) according to claim 1,
**characterised in that** the external, locking grooves (26) of the plug (16) are formed to correspond to the internal locking grooves (24) of the casing (14), and are to form a locking engagement with the locking grooves (24) of the casing (14).

6. Locking device (10) according to claim 1,
**characterised in that** the casing (14) comprises one or more slits (30) that run in the longitudinal direction of the casing (14), and which permits expansion of the casing (14) when the plug (16) is inserted into the casing (14).

7. Locking device (10) according to claim 1,
**characterised in that** the casing (14) is inserted into the housing (12) from a first opening end (12a) of the housing (12), so that the external locking segments (22) of the casing (14) lie against the internal locking segments (20) of the housing (12), and that the plug (16) is inserted into the casing (14) from a second opening end (12b) of the housing (12), so that the external locking grooves (26) of the plug (16) engage with the internal locking grooves (24) of the casing (14).

8. Locking device (10) according to claim 7,
**characterised in that** one end of the casing (14) comprises a head (32), where the head (32) lies against an inner surface (28) in the first opening end (12a) of the housing (12).

9. Locking device (10) according to claim 8,
**characterised in that** inside the casing (14), an internal part of the head (32) functions as a stopping point for the insertion of the plug (16) in the casing (14).

## Patentansprüche

1. Sperrvorrichtung (10) zum Zusammenbauen mehrerer Teile, umfassend ein internes offenes Gehäuse (12), das mit internen Sperrsegmenten (20) versehen ist, einen internen offenen Mantel (14) für ein Einsetzen in das Gehäuse (12), und welcher mit externen Sperrsegmenten (22) und internen Sperrrillen (24) versehen ist, und einen Einsatzkörper (16) für ein Einsetzen in den Mantel (14), und welcher mit externen Sperrrillen (26) versehen ist, wobei
- die externen Sperrsegmente (22) des Mantels (14) den internen Sperrsegmenten (20) des Gehäuses (12) entsprechen und ihnen gegenüberliegen, wobei
- jedes der internen Sperrsegmente (20) des Gehäuses (12) eine schräge Sperroberfläche (20b) aufweist und jedes der externen Sperrsegmente (22) des Mantels (14) eine schräge Sperroberfläche (22b) aufweist, wobei die Sperroberflächen (20b, 22b) während eines Zurückziehens des Einsatzkörpers (16) gegeneinander gezwungen werden.

2. Sperrvorrichtung (10) nach Anspruch 1,
**dadurch gekennzeichnet, dass** die internen Sperrsegmente (20) des Gehäuses (12) eine obere, hauptsächlich vertikale Oberfläche (20a) und eine schräge, nach unten gerichtete untere Sperroberfläche (20b) aufweisen und dass die externen Sperrsegmente (22) des Mantels (14) eine obere, hauptsächlich vertikale Oberfläche (22a) und eine schräge, nach unten gerichtete untere Sperroberfläche (22b) aufweisen.

3. Sperrvorrichtung (10) nach Anspruch 2,
**dadurch gekennzeichnet, dass** die schräge untere Sperroberfläche (20b) des Gehäuses (12) von dem Übergang mit der oberen vertikalen Oberfläche (20a) unter einem abnehmenden Winkel bezüglich einer Mittelachse des Gehäuses verläuft und dass die schräge untere Sperroberfläche (22b) des Mantels (14) von dem Übergang mit der oberen vertikalen Oberfläche (22a) unter einem abnehmenden Winkel bezüglich einer Mittelachse des Mantels verläuft.

4. Sperrvorrichtung (10) nach Ansprüchen 2 und 3,
**dadurch gekennzeichnet, dass** bei Anwendung einer der Einsetzrichtung des Stifts (16) entgegengesetzten axialen Kraft die schräge Sperroberfläche (22b) des Mantels (14) gegen die schräge Sperroberfläche (20b) des Gehäuses (12) gezwungen wird, wodurch die Kraft, die auf den Einsatzkörper (16) in der longitudinalen Richtung wirkt, in eine Kraft in der Querrichtung transformiert wird, um sie zum Mantel (14) zu lenken, der komprimiert wird, und zu der Reibung zwischen dem Stift (16) und Mantel (14) beiträgt, so dass sie schneller als die Rückzugskraft zunimmt.

5. Sperrvorrichtung (10) nach Anspruch 1,
**dadurch gekennzeichnet, dass** die externen Sperrrillen (26) des Einsatzkörpers (16) so ausgebildet sind, dass sie den internen Sperrrillen (24) des Mantels (14) entsprechen, und dazu dienen, einen Verriegelungs- bzw. Sperreingriff mit den Sperrrillen (24) des Mantels (14) auszubilden.

6. Sperrvorrichtung (10) nach Anspruch 1,
**dadurch gekennzeichnet, dass** der Mantel (14) einen oder mehr Schlitze (30) aufweist, die in der longitudinalen Richtung des Mantels (14) verlaufen und welche eine Expansion des Mantels (14) gestatten, wenn der Einsatzkörper (16) in den Mantel (14) eingesetzt wird.

7. Sperrvorrichtung (10) nach Anspruch 1,
**dadurch gekennzeichnet, dass** der Mantel (14) in das Gehäuse (12) von einem ersten Öffnungsende (12a) des Gehäuses (12) aus so eingesetzt wird, dass die externen Sperrsegmente (22) des Mantels (14) an den internen Sperrsegmenten (20) des Gehäuses (12) anliegen und dass der Einsatzkörper (16) in den Mantel (14) von einem zweiten Öffnungsende (12b) des Gehäuses (12) aus so eingesetzt wird, dass die externen Sperrrillen (26) des Einsatzkörpers (16) mit den internen Sperrrillen (24) des Mantels (14) in Eingriff gelangen.

8. Sperrvorrichtung (10) nach Anspruch 7,
**dadurch gekennzeichnet, dass** ein Ende des Mantels (14) einen Kopf (32) umfasst, wobei der Kopf (32) an einer Innenfläche (28) in dem ersten Öffnungsende (12a) des Gehäuses (12) anliegt.

9. Sperrvorrichtung (10) nach Anspruch 8,
**dadurch gekennzeichnet, dass** im Innern des Mantels (14) ein interner Teil des Kopfes (32) als ein Stopppunkt für das Einsetzen des Einsatzkörpers (16) im Mantel (14) dient.

## Revendications

1. Dispositif de verrouillage (10) pour assembler plusieurs pièces, comprenant un logement ouvert interne (12) qui est équipé de segments de verrouillage internes (20), un boîtier ouvert interne (14) à insérer dans le logement (12) et qui est équipé de segments de verrouillage externes (22) et de rainures de verrouillage internes (24), et un bouchon mâle (16) à insérer dans le boîtier (14) et qui est équipé de rainures de verrouillage externes (26), dans lequel
- les segments de verrouillage externes (22) du boîtier (14) correspondent et sont opposés aux segments de verrouillage internes (20) du logement (12), dans lequel
- chacun des segments de verrouillage internes (20) du logement (12) comprend une surface de verrouillage inclinée (20b), et chacun des segments de verrouillage externes (22) du boîtier (14) comprend une surface de verrouillage inclinée (22b), où lesdites surfaces de verrouillage (20b, 22b) sont forcées les unes contre les autres pendant une rétraction du bouchon mâle (16).

2. Dispositif de verrouillage (10) selon la revendication 1,
**caractérisé en ce que** les segments de verrouillage internes (20) du logement (12) comprennent une surface principalement verticale supérieure (20a) et une surface de verrouillage inférieure dirigée vers le bas et inclinée (20b), et **en ce que** les segments de verrouillage externes (22) du boîtier (14) comprennent une surface principalement verticale supérieure (22a) et une surface de verrouillage inférieure dirigée vers le bas et inclinée (22b).

3. Dispositif de verrouillage (10) selon la revendication 2,
**caractérisé en ce que** la surface de verrouillage inférieure inclinée (20b) du logement (12), depuis la transition avec la surface verticale supérieure (20a), se présente à un angle décroissant par rapport à un axe central du logement, et **en ce que** la surface de verrouillage inférieure inclinée (22b) du boîtier (14), depuis la transition avec la surface verticale supérieure (22a), se présente à un angle décroissant par rapport à un axe central du boîtier.

4. Dispositif de verrouillage (10) selon les revendications 2 et 3,
**caractérisé en ce que**, avec l'application d'une force axiale opposée à la direction d'insertion de la broche (16), la surface de verrouillage inclinée (22b) du boîtier (14) est forcée contre la surface de verrouillage inclinée (20b) du logement (12), selon lequel, la force qui agit sur le bouchon mâle (16) dans la direction longitudinale est transformée en une force dans la direction transversale pour mener jusqu'au boîtier (14) qui est comprimé et contribue à l'augmentation plus rapide du frottement entre la broche (16) et le boîtier (14) que de la force de rétraction.

5. Dispositif de verrouillage (10) selon la revendication 1,
**caractérisé en ce que** les rainures de verrouillage externes (26) du bouchon mâle (16) sont formées pour correspondre aux rainures de verrouillage internes (24) du boîtier (14), et doivent former un engrènement de verrouillage avec les rainures de verrouillage (24) du boîtier (14).

6. Dispositif de verrouillage (10) selon la revendication 1,
**caractérisé en ce que** le boîtier (14) comprend une ou plusieurs fentes (30) qui s'étendent dans la direction longitudinale du boîtier (14), et qui permettent l'agrandissement du boîtier (14) lorsque le bouchon mâle (16) est inséré dans le boîtier (14).

7. Dispositif de verrouillage (10) selon la revendication 1,
**caractérisé en ce que** le boîtier (14) est inséré dans le logement (12) depuis une première extrémité d'ouverture (12a) du logement (12), de sorte que les segments de verrouillage externes (22) du boîtier (14) se trouvent contre les segments de verrouillage internes (20) du logement (12), et **en ce que** le bouchon mâle (16) est inséré dans le boîtier (14) depuis une seconde extrémité d'ouverture (12b) du logement (12), de sorte que les rainures de verrouillage externes (26) du bouchon mâle (16) s'engrènent avec les rainures de verrouillage internes (24) du boîtier (14).

8. Dispositif de verrouillage (10) selon la revendication 7,
**caractérisé en ce qu'**une extrémité du boîtier (14) comprend une tête (32), où la tête (32) se trouve contre une surface intérieure (28) dans la première extrémité d'ouverture (12a) du logement (12).

9. Dispositif de verrouillage (10) selon la revendication 8,
**caractérisé en ce que**, à l'intérieur du boîtier (14), une pièce interne de la tête (32) fonctionne en tant qu'un point d'arrêt pour l'insertion du bouchon mâle (16) dans le boîtier (14).
